# EUROPEAN PATENT SPECIFICATION

(11) **EP 2 757 658 B1**
(45) Date of publication and mention of the grant of the patent: **02.11.2016**
(21) Application number: 12831165.1
(22) Date of filing: 14.09.2012
(51) Int. Cl.: H05B 6/06, H05B 6/12, H04B 5/00, H02J 7/02

(54) **NON-CONTACT POWER FEED DEVICE AND NON-CONTACT POWER TRANSMISSION DEVICE**
KONTAKTLOSE STROMVERSORGUNGSVORRICHTUNG UND KONTAKTLOSE STROMÜBERTRAGUNGSVORRICHTUNG
DISPOSITIF D'ALIMENTATION EN ÉNERGIE SANS CONTACT ET DISPOSITIF DE TRANSMISSION D'ÉNERGIE SANS CONTACT

(30) Priority: 14.09.2011 JP 2011200474; 16.12.2011 JP 2011275399
(43) Date of publication of application: 23.07.2014
(73) Proprietor: Panasonic Corporation, Osaka 571-8501 (JP)
(72) Inventor: KITAIZUMI, Takeshi, Osaka 540-6207 (JP); SHIGEOKA, Takehiko, Osaka 540-6207 (JP); KATAOKA, Akira, Osaka 540-6207 (JP)
(74) Representative: Eisenführ Speiser
(86) International application number: PCT/JP2012/005876
(87) International publication number: WO 2013/038694

(56) References cited:
- WO-A1-2011/036702
- WO-A2-01/97570
- JP-A- H05 184 471
- JP-A- 2000 166 129
- JP-A- 2010 016 985
- JP-A- 2010 226 929
- JP-A- 2011 019 291
- US-A- 4 996 405

## Description

### Technical Field

The present invention relates to non-contact power receiving devices which are adapted to utilize, as a feeding apparatus, an induction heating apparatus for heating an object to be heated by utilizing a high-frequency magnetic field and, further, are placed on the induction heating apparatus so as to be supplied with electric power utilizing a high-frequency magnetic field from the induction heating apparatus. Further, the present invention relates to non-contact power transmission devices including the induction heating apparatus and the non-contact power receiving device.

### Background Art

In conventional non-contact power receiving devices which are supplied with electric power from induction heating apparatuses used as feeding apparatuses, the power receiving devices have been provided with switches to enable users to manually perform manipulations for changing over between operations for receiving electric power and stopping of power reception, while viewing the state of the usage thereof. Conventional non-contact power transmission devices have been structured to include a non-contact power receiving device and an induction heating apparatus as a feeding apparatus, which are both provided with switches, in such a way as to perform operations for feeding electricity from the induction heating apparatus to the non-contact power receiving device, when both the switches in the induction heating apparatus and the non-contact power receiving device have been turned on (refer to Patent Literature 1, for example).

Further, there have been suggested conventional non-contact power transmission devices structured to include a non-contact power receiving device which is provided with transmission means for transmitting signals, and an induction heating apparatus as a feeding apparatus which is provided with receiving means for receiving a predetermined signal from the non-contact power receiving device, and pan-detecting means for detecting the presence or absence of an object to be heated, such as a pan (refer to Patent Literature 2, for example). Such conventional non-contact power transmission devices have been structured such that a high-frequency electric current is supplied to a heating coil in the induction heating apparatus, if the receiving means in the induction heating apparatus receives a predetermined signal from the non-contact power receiving device and, also, the pan-detecting means detects an object to be heated (pan). Further, such conventional non-contact power transmission devices have been adapted such that, if the pan-detecting means detects an object to be heated (pan), the induction heating apparatus performs temperature control and power control for the non-contact power receiving device, by receiving a predetermined signal from the non-contact power receiving device (refer to Patent Literature 2, for example).

WO 01/97570 A2 discloses a non-contact power transmitting device according to the preamble of the claim 7.

Further, in the disclosure of the present specification, the term "non-contact" refers to electrically and mechanically un-coupled states and, also, covers states of contact between apparatuses which are simply placed on each other.

### Citation List

### Patent Literatures

Patent Literature 1: Unexamined Japanese Patent Publication No. H04-156242
Patent Literature 2: Unexamined Japanese Patent Publication No. H05-184471

### Summary of Invention

### Technical Problem

In cases of employing an induction heating apparatus as a feeding apparatus, as described above, there is the problem that it is possible to perform only simple control for starting/stopping of power receiving operations in the non-contact power receiving device to be fed with electricity. Further, in order to perform electricity-feeding operations with the non-contact power transmission device disclosed in Patent Literature 1, it is necessary to manipulate both the switches in the induction heating apparatus and the non-contact power receiving device, thereby inducing the problem of poor usability. Further, when the switch in the power receiving device has been turned on, in states where the power receiving device has not been ready, if the switch in the feeding apparatus is wrongly turned on, this drives the non-contact power receiving device against the user's will, thereby inducing the problem in terms of safety.

Further, in cases of employing an induction heating cooker as a feeding apparatus, the power receiving operations in the non-contact power receiving device are fluctuated depending on the induction heating cooker used therewith, thereby inducing the problem of insufficient performance, since the outputs of induction heating cookers and the shapes of heating coils, which determine the performance of these induction heating cookers, are varied depending on their manufactures and, further, are varied depending on the types of the apparatuses even when they are provided by the same manufacture.

The non-contact power transmission device disclosed in Patent Literature 2 induces the problem as follows. That is, in cases where a non-contact power receiving device having electric characteristics similar to those of a pan is placed on the induction heating cooker as a feeding device, the induction heating cooker misidentifies the non-contact power receiving device as a pan and, thus, starts heating operations. Such non-contact power transmission devices have had the problem that the non-contact power receiving device exhibits insufficient performance, since the output from the induction heating cooker for heating a pan is different from the output required for power reception in the non-contact power receiving device.

Further, in order to perform temperature control and power control for the non-contact power receiving device, as in the structure of the conventional non-contact power transmission device disclosed in Patent Literature 2, there is a need for transfer of information between the non-contact power receiving device and the induction heating cooker as the feeding apparatus. Therefore, the structures of such conventional non-contact power transmission devices have necessitated dedicated appliances, thereby inducing the problem of restrictions imposed on induction heating cookers usable therewith.

The present invention was made to overcome the aforementioned various types of problems in conventional structures and aims at providing a non-contact power receiving device and a non-contact power transmission device with excellent safety and excellent reliability which are capable of performing power receiving operations with higher efficiency and, also, are capable of performing desired received power control through control of the non-contact power receiving device.

### Solution to Problem

In order to solve the above-mentioned problems, a non-contact power receiving device according to the present invention comprises:
a power receiving coil adapted to output electric power by receiving a high-frequency magnetic field from an induction heating apparatus used as a feeding apparatus;
a load device adapted to be supplied with the electric power from the power receiving coil;
a changeover portion adapted to open and close a connection between the power receiving coil and the load device; and
a power-reception-side control portion adapted to control an opening/closing operation of the changeover portion;
wherein
the power-reception-side control portion is adapted to control the opening/closing operation of the changeover portion, in order to adjust the electric power supplied to the load device from the power receiving coil, and wherein the power-reception-side control portion is adapted to set an opening time interval, during the opening/closing operation of the changeover portion, to be within a time interval during which the induction heating apparatus used as the feeding apparatus can be reactivated.

The non-contact power receiving device having the aforementioned structure according to the present invention has excellent safety and excellent reliability and, further, is capable of performing power receiving operations with higher efficiency and, further, is capable of performing desired received power control through control of the non-contact power receiving device.

A non-contact power transmission device according to the present invention comprises:
an induction heating apparatus including a heating coil for generating a high-frequency magnetic field and forming a feeding apparatus; and
a non-contact power receiving device being placed on the induction heating apparatus and being adapted to create desired electric power by receiving the high-frequency magnetic field from the heating coil,
wherein
the non-contact power receiving device includes
a power receiving coil adapted to output electric power by receiving the high-frequency magnetic field from the heating coil,
a load device adapted to be supplied with electric power from the power receiving coil,
a changeover portion adapted to open and close a connection between the power receiving coil and the load device, and
a power-reception-side control portion adapted to control an opening/closing operation of the changeover portion,
the power-reception-side control portion is adapted to control the opening/closing operation of the changeover portion, in order to adjust the electric power supplied to the load device from the power receiving coil, and
the power-reception-side control portion is adapted to set an opening time interval, during the opening/closing operation of the changeover portion, to be within a time interval during which the induction heating apparatus can be reactivated, in order to adjust the electric power supplied to the load device from the power receiving coil.

The non-contact power transmission device having the aforementioned structure according to the present invention has excellent safety and excellent reliability and, further, is capable of performing power receiving operations with higher efficiency and, further, is capable of performing desired received power control through control of the non-contact power receiving device.

### Advantageous Effects of Invention

According to the present invention, it is possible to provide a non-contact power receiving device and a non-contact power transmission device with excellent safety and excellent reliability which are capable of performing power receiving operations with higher efficiency and, further, are capable of performing received power control through control of the non-contact power receiving device.

### Brief Description of Drawings

Fig. 1 is a view illustrating, in a block diagram manner, the structures of a non-contact power receiving device and a non-contact power transmission device according to a first embodiment of the present invention.
Fig. 2 is a view illustrating, in a block diagram manner, another structure of the non-contact power receiving device according to the first embodiment.
Fig. 3 is a flow chart illustrating operations of the non-contact power receiving device during temperature control, according to the first embodiment.
Fig. 4 is waveform diagrams in respective portions in the non-contact power receiving device according to the first embodiment and is a view illustrating the waveforms in the respective portions in the non-contact power receiving device according to the first embodiment.
Fig. 5 is a view illustrating, in a block diagram manner, the structures of a non-contact power receiving device and a non-contact power transmission device according to a second embodiment of the present invention.
Fig. 6 is a view illustrating, in a block diagram manner, the structures of a non-contact. power receiving device and a non-contact power transmission device according to a third embodiment of the present invention.
Fig. 7 is a flow chart illustrating operations of the non-contact power receiving device during output voltage control, according to the third embodiment.
Fig. 8 is a view of waveforms in respective portions in the non-contact power receiving device according to the third embodiment.
Fig. 9 is a view illustrating, in a block diagram manner, the structure of a non-contact power transmission device according to a fourth embodiment of the present invention.
Fig. 10 is a view illustrating, in a block diagram manner, the structure of a non-contact power transmission device according to a fifth embodiment of the present invention.

### Description of Embodiments

A non-contact power receiving device of a first aspect according to the present invention comprises:
a power receiving coil adapted to output electric power by receiving a high-frequency magnetic field from an induction heating apparatus used as a feeding apparatus;
a load device adapted to be supplied with the electric power from the power receiving coil;
a changeover portion adapted to open and close a connection between the power receiving coil and the load device; and
a power-reception-side control portion adapted to control an opening/closing operation of the changeover portion;
wherein
the power-reception-side control portion is adapted to control the opening/closing operation of the changeover portion, in order to adjust the electric power supplied to the load device from the power receiving coil, and wherein the power-reception-side control portion is adapted to set an opening time interval, during the opening/closing operation of the changeover portion, to be within a time interval during which the induction heating apparatus used as the feeding apparatus can be reactivated.

With the non-contact power receiving device having the aforementioned structure in the first aspect of the present invention, it is possible to perform received power control through control of the non-contact power receiving device, without necessitating control of dedicated communication between the non-contact power receiving device and the induction heating apparatus used as the feeding apparatus. This enables use of an induction heating apparatus for general purpose use as the feeding apparatus, which can realize a power receiving device with excellent usability which imposes less restrictions on the appliance used as the feeding apparatus.

A non-contact power receiving device of a second aspect according to the present invention, wherein the power-reception-side control portion of the aforementioned first aspect is adapted to set the opening time interval to be longer than a closing time interval, during the opening/closing operation of the changeover portion, in order to adjust the electric power supplied to the load device from the power receiving coil.

With the non-contact power receiving device having the aforementioned structure in the second aspect of the present invention, it is possible to realize a power receiving device with excellent usability which is capable of performing received power control through control in only the non-contact power receiving device.

A non-contact power receiving device of a third aspect according to the present invention, wherein the power-reception-side control portion of the aforementioned first or second aspect is adapted to bring the changeover portion into an opened state for bringing the induction heating apparatus into a heating stop state and, thereafter, bring the changeover portion into a closed state for a constant time interval within a time interval during which the induction heating apparatus can be reactivated for restarting a heating operation of the induction heating apparatus, during the opening/closing operation of the changeover portion, in order to adjust the electric power supplied to the load device from the power receiving coil.

With the non-contact power receiving device having the aforementioned structure in the third aspect of the present invention, it is possible to prevent the induction heating apparatus from being automatically stopped, which enables received power control, even in states where there is no need for communication between the non-contact power receiving device and the induction heating apparatus for controlling the non-contact power receiving device. Therefore, with the non-contact power receiving device in the third aspect of the present invention, it is possible to use an induction heating apparatus for general purpose use. This can realize a power receiving device with excellent usability which imposes less restrictions on the appliance used as the feeding apparatus.

A non-contact power receiving device of a fourth aspect according to the present invention, in the aforementioned first to third aspect, wherein the load device is partially formed from a heater for heating an object to be heated,
there is provided a temperature detection portion adapted to detect a temperature of the heater or the object to be heated by the heater,
the power-reception-side control portion is adapted to control the opening/closing operation of the changeover portion such that the temperature detected by the temperature detection portion reaches a predetermined temperature, for adjusting the electric power supplied to the load device from the power receiving coil.

With the non-contact power receiving device having the aforementioned structure in the fourth aspect of the present invention, it is possible to control the temperature of the heater or the object to be heated, through the non-contact power receiving device, which eliminates the necessity of power control in the induction heating apparatus. This eliminates the necessity of providing information about the temperature of the heater or the object to be heated, to the induction heating device, which enables use of an induction heating apparatus for general purpose use. This can realize a non-contact power receiving device with excellent usability which imposes less restrictions on the appliance used as the feeding apparatus.

A non-contact power receiving device of a fifth aspect according to the present invention, in the aforementioned first to third aspect, wherein the load device is partially formed from a power-reception-side heating coil, and a heating portion to be heated by the power-reception-side heating coil,
there is provided a temperature detection portion adapted to detect a temperature of the heating object,
the power-reception-side control portion is adapted to control the opening/closing operation of the changeover portion such that the temperature detected by the temperature detection portion reaches a predetermined temperature, for adjusting the electric power supplied to the load device from the power receiving coil.

With the non-contact power receiving device having the aforementioned structure in the fifth aspect of the present invention, it is possible to control the temperature of the heating portion, through the non-contact power receiving device, which eliminates the necessity of power control in the induction heating apparatus. This eliminates the necessity of providing information about the temperature of the heating portion, to the induction heating device, which enables use of an induction heating apparatus for general purpose use. This can realize a non-contact power receiving device with excellent usability which imposes less restrictions on the appliance used as the feeding apparatus.

A non-contact power receiving device of a sixth aspect according to the present invention, in the aforementioned first to third aspect, wherein the load device is partially formed from a power supply circuit,
there is provided a voltage detection portion adapted to detect a voltage in the power supply circuit,
the power-reception-side control portion is adapted to control the opening/closing operation of the changeover portion such that the voltage detection portion reaches a predetermined voltage, for adjusting the electric power supplied to the load device from the power receiving coil.

With the non-contact power receiving device having the aforementioned structure in the sixth aspect of the present invention, it is possible to control the voltage in the power supply circuit through the non-contact power receiving device, which eliminates the necessity of power control in the induction heating apparatus. This eliminates the necessity of providing information for control, such as the voltage in the power supply circuit, to the induction heating device, which enables use of an induction heating apparatus for general purpose use. This can realize a non-contact power receiving device with excellent usability which imposes less restrictions on the appliance used as the feeding apparatus.

A non-contact power transmission device of a seventh aspect according to the present invention comprises:
an induction heating apparatus including a heating coil for generating a high-frequency magnetic field and forming a feeding apparatus; and
a non-contact power receiving device being placed on the induction heating apparatus and being adapted to create desired electric power by receiving the high-frequency magnetic field from the heating coil,
wherein
the non-contact power receiving device includes
a power receiving coil adapted to output electric power by receiving the high-frequency magnetic field from the heating coil,
a load device adapted to be supplied with electric power from the power receiving coil,
a changeover portion adapted to open and close a connection between the power receiving coil and the load device, and
a power-reception-side control portion adapted to control an opening/closing operation of the changeover portion,
the power-reception-side control portion is adapted to control the opening/closing operation of the changeover portion, in order to adjust the electric power supplied to the load device from the power receiving coil, and
the power-reception-side control portion is adapted to set an opening time interval, during the opening/closing operation of the changeover portion, to be within a time interval during which the induction heating apparatus can be reactivated, in order to adjust the electric power supplied to the load device from the power receiving coil.

With the non-contact power transmission device having the aforementioned structure in the seventh aspect of the present invention, there is no need for communication between the non-contact power receiving device and the induction heating apparatus, in order to control the non-contact power receiving device. This enables use of an induction heating apparatus for general purpose use. This can realize a power transmission device with excellent usability which imposes less restrictions on the type of the induction heating apparatus used as the feeding apparatus.

A non-contact power transmission device of an eighth aspect according to the present invention, in the aforementioned seventh aspect, wherein the power receiving coil is placed at a position faced to the heating coil in the induction heating apparatus, when the power receiving device creates electric power by receiving the high-frequency magnetic field from the induction heating apparatus.

With the non-contact power transmission device having the aforementioned structure in the eighth aspect of the present invention, there is no need for communication between the non-contact power receiving device and the induction heating apparatus, in order to control the non-contact power receiving device. This enables use of an induction heating apparatus for general purpose use. This can realize a power transmission device with excellent usability which imposes less restrictions on the type of the induction heating apparatus used as the feeding apparatus.

A non-contact power transmission device of a ninth aspect of the present invention, in the aforementioned eighth aspect, wherein the power-reception-side control portion is adapted to bring the changeover portion into an opened state for bringing the induction heating apparatus into a feeding stop state within a time interval during which the induction heating apparatus can be reactivated and, further, bring the changeover portion into a closed state for a constant time interval for bringing the induction heating apparatus into a feeding state, during the opening/closing operation of the changeover portion, in order to adjust the electric power supplied to the load device from the power receiving coil.

With the non-contact power transmission device having the aforementioned structure in the ninth aspect of the present invention, it is possible to prevent the induction heating apparatus from being automatically stopped running during feeding electricity, which enables certainly controlling the power reception, even in states where there is no need for communication between the non-contact power receiving device and the induction heating apparatus for controlling the non-contact power receiving device. Therefore, with the non-contact power transmission device in the ninth aspect of the present invention, it is possible to use an induction heating apparatus for general purpose use. This can realize a power transmission device with excellent usability which imposes less restrictions on the type of the induction heating apparatus as the feeding apparatus.

Hereinafter, there will be described, in detail, embodiments of the non-contact power receiving device and the non-contact power transmission device according to the present invention, with reference to the drawings, as appropriate. For example, matters which have been already well known will not be described in detail, and structures which are substantially the same will not be described redundantly, in some cases. This is for preventing the following description from being unnecessarily redundant, in order to allow those skilled in the art to easily understand it.

Further, the present inventors provide the accompanying drawings and the following description for allowing those skilled in the art to sufficiently understand the present invention, and they are not intended to restrict the subjects defined in the claims.

The non-contact power receiving devices and the non-contact power transmission devices according to the following embodiments will be described with respect to examples where an induction heating cooker is employed as a feeding apparatus, but these structures are merely illustrative, and the present invention is not limited to the structures which will be described in the following embodiments and, also, covers non-contact power receiving devices and non-contact power transmission devices which have the technical characteristics of the present invention. Further, the present invention also covers appropriate combinations of arbitrary structures which will be described in the following respective embodiments, and the combined structures exert their respective effects.

### (First Embodiment)

Hereinafter, with reference to the accompanying drawings, there will be described a non-contact power receiving device, and a non-contact power transmission device constituted by the non-contact power receiving device and an induction heating apparatus (induction heating cooker), according to a first embodiment of the present invention.

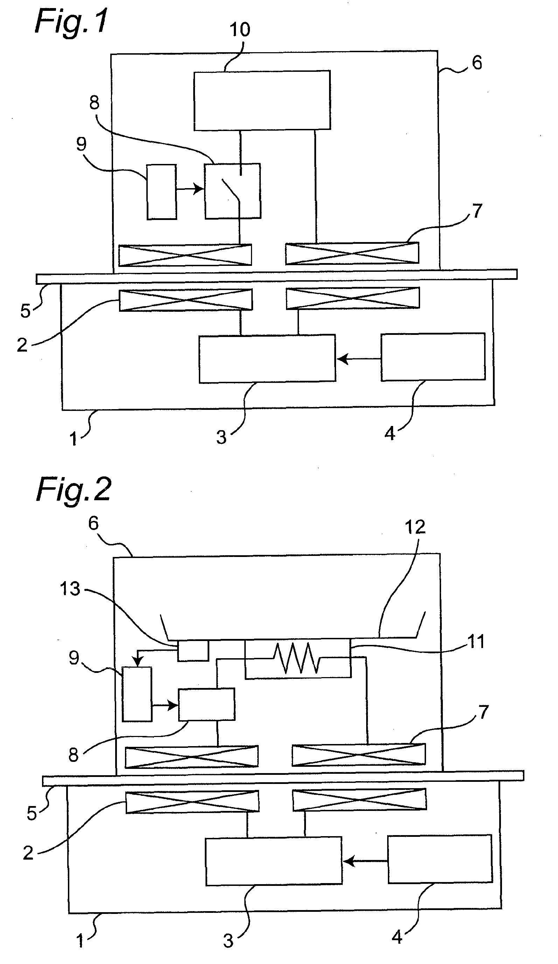

Fig. 1 is a structural view illustrating, in a block diagram manner, the structure of the non-contact power transmission device according to the first embodiment of the present invention, illustrating a state where the non-contact power receiving device is placed on the induction heating apparatus (the induction heating cooker). As illustrated in Fig. 1, the non-contact power receiving device 6 is placed on a top plate 5 of the induction heating cooker as the induction heating apparatus 1, which is used as a feeding apparatus. The top plate 5 is made of a crystallized glass, and the like. In the state where the non-contact power receiving device 6 is placed on the top plate 5 of the induction heating apparatus 1, a heating coil (primary coil) 2 in the induction heating apparatus 1 and a power receiving coil (secondary coil) 7 in the non-contact power receiving device 6 are placed at positions opposed to each other.

The induction heating apparatus 1 includes the heating coil 2 as a feeding coil, an inverter 3 for supplying high-frequency electric power to the heating coil 2, and a heating-side control portion 4 adapted to control semiconductor switches in the inverter 3.

On the other hand, the non-contact power receiving device 6 includes the power receiving coil 7, a load device 10 adapted to hold or consume electric power from the power receiving coil 7, a changeover portion 8 for opening and closing the connection between the power receiving coil 7 and the load device 10, and a power-reception side control portion 9 adapted to control operations of the changeover portion 8.

Next, there will be described the non-contact power transmission device which employs the induction heating apparatus 1 as a feeding apparatus and, further, includes the non-contact power receiving device 6 having the aforementioned structure according to the first embodiment, which is mounted on the induction heating apparatus 1, with respect to operations and effects thereof.

In the induction heating apparatus 1, the heating-side control portion 4 converts electric power supplied from an AC power supply, which is not illustrated, into high-frequency electric power with frequencies of 20 kHz to 100 kHz, using the semiconductor switches in the inverter 3, and the high-frequency electric power resulted from the conversion is supplied to the heating coil 2. The high-frequency electric power supplied to the heating coil 2 is transmitted to the power receiving coil 7 in the non-contact power reception device 6.

When the high-frequency electric power is transmitted from the heating coil 2 to the power receiving coil 7, if the changeover portion 8 is in a closed state and, also, the load device 10 satisfies a set condition which enables supply of electric power thereto, the load device 10 is supplied with electric power from the heating coil 2.

On the other hand, if the changeover portion 8 is in an opened state or the load device 10 does not satisfy the set condition which enables supply of electric power thereto, the heating-side control portion 4 in the induction heating apparatus 1 determines that no load is placed on the top plate 5 or a proper load is not placed thereon and, thus, the heating-side control portion 4 temporarily stops the operation of the inverter 3.

After the inverter 3 has been temporarily stopped as described above, the heating-side control portion 4 periodically performs operations for detecting whether or not a load is properly placed on the top plate 5, by periodically operating the inverter 3 at predetermined time intervals. During the periodic detecting operations, if the heating-side control portion 4 determines that the non-contact power receiving device 6, for example, as a proper load, is placed on the top plate 5, operations for supplying electric power to the load device 10 in the non-contact power receiving device 6 are performed.

On the other hand, after the inverter 3 has been temporarily stopped, if the state is not changed during the periodic detection operations at the predetermined time intervals, namely if the heating-side control portion 4 determines that no load is placed on the top plate 5 or a proper load is not placed thereon, the temporarily-stopped state of the inverter 3 is continued.

The non-contact power receiving portion 6 according to the first embodiment is provided with the changeover portion 8 for opening and closing the connection between the power receiving coil 7 and the load device 10. When the changeover portion 8 is in an opened state, the heating-side control portion 4 in the induction heating apparatus 1 determines that a proper load is not placed on the top plate 5 and, further, temporarily stops the inverter 3. Accordingly, since the power-reception side control portion 9 in the non-contact power receiving device 6 controls the opening/closing operations of the changeover portion 8, it is possible to control the release and the continuation of the temporarily-stopped state of the inverter 3 in the induction heating apparatus 1. As a result thereof, through the power-reception side control portion 9 in the non-contact power receiving device 6, it is possible to control the amount of electric power supplied to the non-contact power receiving device 6 from the induction heating apparatus 1.

As described above, when the power-reception side control portion 9 controls the electric power supplied to the non-contact power receiving device 6 from the induction heating apparatus 1, there is no need for transfer of control signals from the non-contact power receiving device 6 to the induction heating apparatus 1. Therefore, the non-contact power receiving device according to the first embodiment can be used, as a power receiving device with general versatility, with various types of induction heating apparatuses, without depending on the types of such induction heating apparatuses as feeding apparatuses.

Further, although the non-contact power receiving device according to the first embodiment employs changeover means such as a relay or a semiconductor switch, as the changeover portion 8, the present invention is not limited to this structure and also can employ any component having the same functions thereas.

Further, the heating-side control portion 4 is structured to identify no-load states and improper loads, based on a combination of various parameters, such as the input electric current flowing through the inverter 3, an electric current and a voltage which are generated in the heating coil 2, the conduction time periods of the semiconductor switches in the inverter 3, and the frequency of the semiconductor switches. However, in the structure according to the first embodiment, the method for detecting no-load states and improper-load states is not particularly limited and can be any methods using a value detected within the induction heating apparatus. Thus, the structure according to the first embodiment is capable of utilizing no-load detecting functions and improper-load detecting functions which have been utilized in ordinary induction heating apparatuses.

Next, with reference to Fig. 2, there will be described an example where a heater 11 is employed as the load device. Fig. 2 is a view illustrating, in a block diagram manner, another structure of the non-contact power receiving device 6 according to the first embodiment of the present invention. As illustrated in Fig. 2, the load device in the non-contact power receiving device 6 is constituted by a heater 11, and a receiving plate 12 is placed near and above the heater 11. Namely, the receiving plate 12 is provided just above and near the heater 11. The non-contact power receiving device 6 according to the first embodiment is adapted to control the electric power in the heater 11 for performing heating cooking on food as an object to be heated, which is placed on the receiving plate 12. Further, in this case, the object to be heated by the heater 11 includes the receiving plate 12.

During heating cooking as described above, a temperature detection portion 13 as temperature detecting means, which is constituted by a thermistor or the like, is caused to detect the temperature of the receiving plate 12 or the vicinity of the receiving plate 12, the temperature of the heater 11, or the like. The power-reception side control portion 9 controls the electric power received from the induction heating apparatus 1, by controlling the opening/closing operations of the changeover portion 8, such that the value detected by the temperature detection portion 13, which is the output value from the temperature detection portion 13, falls within a predetermined temperature range.

### [Temperature Control Operations]

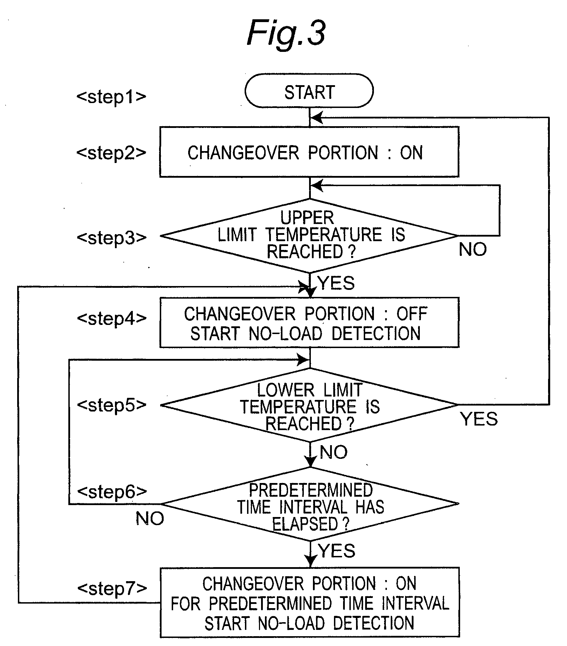

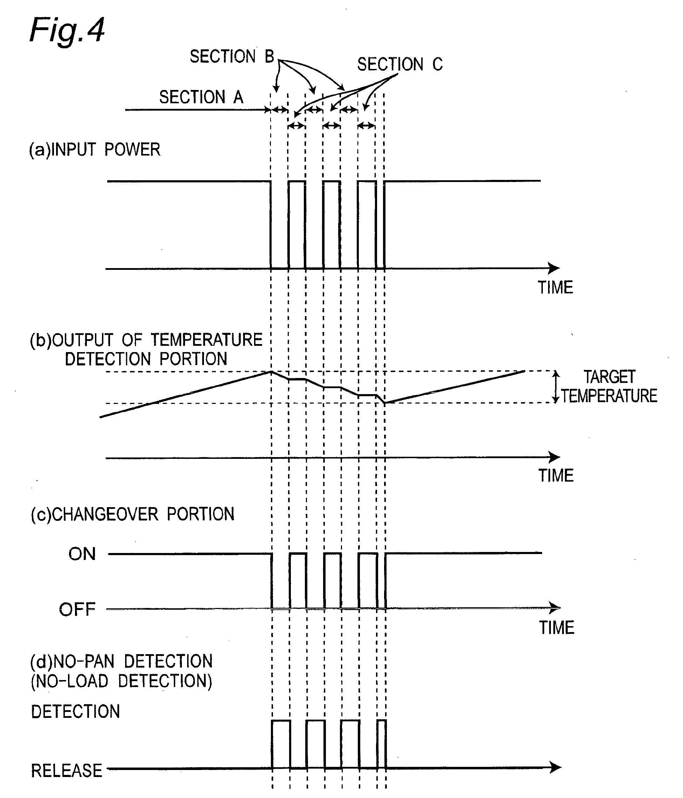

Next, with reference to Figs. 3 and 4, operations for temperature control according to the first embodiment will be described. Fig. 3 is a flow chart illustrating operations of the non-contact power receiving device 6 during temperature control, according to the first embodiment. Fig. 4 is waveform diagrams in respective portions in the non-contact power receiving device 6 according to the first embodiment, illustrating the changes of respective control values with time.

In Fig. 4, (a) is the waveform diagram illustrating the change of the electric power inputted from the induction heating apparatus 1, (b) is the waveform diagram illustrating the output of the temperature detection portion 13, (c) is the waveform diagram illustrating the state of the opening/closing operations of the changeover portion 8, and (d) is the waveform diagram illustrating the state of the no-load detecting function (no-pan detecting function) executed by the heating-side control portion 4.

At first, if the non-contact power receiving device 6 is placed on the induction heating apparatus 1, the induction heating apparatus 1 starts operating (step 1). At this time, the changeover portion 8 is in a closed state (ON state), thereby realizing a feeding state where the heater 11 is supplied with electric power (step 2 ; section A).

As illustrated in Fig. 4(b), in the section A, since the heater 11 is in a conduction state, the temperature in the vicinity of the receiving plate 12 starts rising, and the value detected by the temperature detection portion 13 reaches a target temperature upper limit value (step 3).

If the value detected by the temperature detection portion 13 reaches the target temperature upper limit value, the power-reception side control portion 9 brings the changeover portion 8 into an opened state (OFF state). In this state, in the induction heating apparatus 1, the heating-side control portion 4 determines that a proper load does not exist on the top plate 5 and, thus, brings the inverter 3 into a temporarily-stopped state (feeding stop state) (step 4 ; section B).

When the inverter 3 is in the temporarily-stopped state in the induction heating apparatus 1, if the output value from the temperature detection portion 13 reaches a target temperature lower limit value, the power-reception side control portion 9 brings the changeover portion 8 into a closed state, thereby causing the inverter 3 in the induction heating apparatus 1 to restart operating (in a feeding state) (step 5). As described above, the heating-side control portion 4 operates the inverter 3 at a period of a predetermined time interval Ta (for example, 2 seconds), within a constant time interval Tb (for example, 1 minute) during which the induction heating apparatus cannot be completely stopped running and can be activated again (Ta<Tb), thereby detecting whether or not a load is properly placed thereon.

In the non-contact power receiving device 6, after the elapse of a predetermined time interval Tc (Ta<Tc<Tb) (step 6), the power-reception side control portion 9 brings the changeover portion 8 into a closed state for a predetermined time interval Td which has been preliminarily set. Since the changeover portion 8 is brought into the closed state as described above, the heating-side control portion 4 in the induction heating apparatus 1 is caused to determine that a proper load has been placed and, thus, is caused to supply electric power (step 7 ; section C).

In the step 7, if the power supply state is continued for a longer time period, the temperature detected by the temperature detection portion 13 is largely raised, again. Therefore, the changeover portion 8 is adapted to be brought into the closed state only for the predetermined time interval Td. Accordingly, after the elapse of the predetermined time interval Td since the heating-side control portion 4 determined that a proper load had been placed and started the supply of electric power, the changeover portion 8 is brought into an opened state (from step 7 to step 4). Further, the predetermined time interval Tc for which the changeover portion 8 is brought into an opened state is 5 to 6 seconds, for example. The predetermined time interval Td for which the changeover portion 8 is brought into a closed state is 2 to 3 seconds, for example.

As described above, in the non-contact power receiving device 6 according to the first embodiment, the changeover portion 8 is brought into a closed state, at a constant period, at predetermined time intervals, which realizes a state where the induction heating apparatus 1 continuously performs operations without being completely stopped running. Further, in the non-contact power receiving device 6 according to the first embodiment, during the opening/closing operations of the changeover portion 8, the time intervals for which it is in the opened state are made to occupy a larger part thereof, so that the detected temperature, which is the output value from the temperature detection portion 13, gradually decreases and, finally, reaches the target temperature lower limit value. Therefore, the non-contact power transmission device according to the first embodiment is structured such that, if the temperature detected by the temperature detection portion 13 reaches the target temperature lower limit value, the changeover portion 8 is brought into a closed state, thereby causing the induction heating apparatus 1 to perform continuous power supply operations.

Accordingly, with the non-contact power transmission device illustrated in Fig. 2, it is possible to heat the food on the receiving plate 12 at a constant temperature, which enables temperature control for automated cooking.

As described above, the non-contact power transmission device illustrated in Fig. 2 has the excellent characteristic of being capable of temperature control only through control in the non-contact power receiving device 6, due to the use of the changeover portion 8 and the power-reception-side control portion 9 in the non-contact power receiving device 6. Further, the non-contact power receiving device illustrated in Fig. 2 utilizes functions (no-load detecting functions / improper-load detecting functions) which have been provided in ordinary induction heating apparatuses, which facilitates temperature control in the non-contact power receiving device 6.

The non-contact power transmission device according to the first embodiment is adapted to transmit electric power through the heating coil 2 and the power receiving coil 7 and, therefore, has the advantage of enabling the user to reduce the maximum electric power by preliminarily setting the value of the electric power supplied from the induction heating apparatus 1 to be a lower value, the advantage of enabling the user to reduce temperature changes by narrowing the temperature control range, and the like.

Further, although the non-contact power transmission device according to the first embodiment has been described by exemplifying an appliance such as a roaster which is adapted to place an object to be heated on the receiving plate 12 above the heater 11, it goes without saying that it is also possible to offer the same effects for kettles, cooking pans and the like, in such a way as to place these containers above the heater.

As described above, in the non-contact power transmission device according to the first embodiment, between the power receiving coil 7 and the load device 10, the non-contact power receiving device 6 is provided with the changeover portion 8 for opening and closing the connection between the power receiving coil 7 and the load device 10, and the power-reception side control portion 9 in the non-contact power receiving device 6 is structured to utilize heating stop states based on no-load detection / improper-load detection in the induction heating apparatus 1. Further, in the non-contact power receiving device 6 according to the first embodiment, the power receiving coil 7 in the non-contact power receiving device 6 is placed at a position faced to the heating coil 2 in the induction heating apparatus 1 and, in states where the non-contact power receiving device 6 can be supplied with electric power from the induction heating apparatus 1, the changeover portion 8 is caused to perform opening and closing operations within a time interval during which the induction heating apparatus 1 can perform reactivation operations, which enables adjustments of the amount of electric power received by the non-contact power receiving device, even when it is on an induction heating apparatus for general purpose use. Therefore, with the structure of the non-contact power receiving device according to the first embodiment, it is possible to reduce the restrictions imposed on the type of the induction heating apparatus to be used as the feeding apparatus, thereby realizing a power receiving device with excellent general versatility and excellent usability.

### (Second Embodiment)

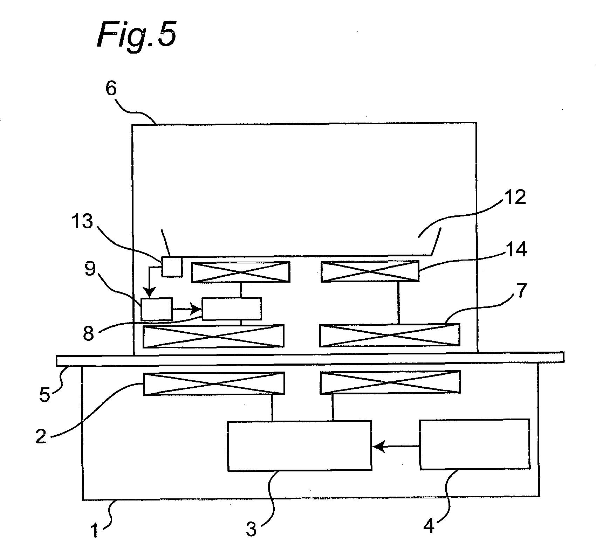

Hereinafter, there will be described a non-contact power receiving device and a non-contact power transmission device according to a second embodiment of the present invention, with reference to the drawings. Fig. 5 is a view illustrating the structures of the non-contact power receiving device and the non-contact power transmission device according to the second embodiment of the present invention. The structure according to the second embodiment is different from the structure according to the aforementioned first embodiment, in that the non-contact power receiving device includes a load device which is constituted by a power-reception side heating coil 14 which is supplied with electric power from a power receiving coil 7, and a receiving plate 12 placed above and near the power-reception side heating coil 14.

Next, there will be described the non-contact power transmission device which employs the induction heating apparatus 1 as a feeding apparatus and, further, includes the non-contact power receiving device 6 having the aforementioned structure according to the second embodiment, which is mounted on the induction heating apparatus 1, with respect to operations and effects thereof.

In the induction heating apparatus 1, a heating-side control portion 4 converts electric power supplied from an AC power supply, which is not illustrated, into high-frequency electric power with frequencies of 20 kHz to 100 kHz, using semiconductor switches in an inverter 3, and the high-frequency electric power resulted from the conversion is supplied to a heating coil 2 (primary coil). The high-frequency electric power supplied to the heating coil 2 is transmitted to the power receiving coil 7 (the secondary coil) in the non-contact power reception device 6.

The power receiving coil 7 in the non-contact power receiving device 6 is connected to the power-reception side heating coil 14, with a changeover portion 8 interposed therebetween. A power-reception side control portion 9 brings the changeover portion 8 into a closed state, thereby supplying high-frequency electric power from the power receiving coil 7 to the power-reception side heating coil 14. The high-frequency electric power supplied to the power-reception side heating coil 14 causes the power-reception side heating coil 14 to generate a high-frequency magnetic field. The high-frequency magnetic field generated therein is applied to the receiving plate 12 which is made of a magnetic metal in at least a portion thereof and is placed above the power-reception side heating coil 14, thereby causing the receiving plate 12 to generate heat therefrom. Further, in this case, the receiving plate 12, which is inductively heated by the power-reception side heating coil 14, forms a heating portion and, also, forms an object to be heated.

When the receiving plate 12 is not placed above the power-reception side heating coil 14 or when the changeover portion 8 is in an opened state, the heating-side control portion 4 in the induction heating apparatus 1 determines that no load is placed on a top plate 5 or a proper load is not placed thereon and, thus, the heating-side control portion 4 temporarily stops the inverter 3.

After the inverter 3 has been temporarily stopped as described above, the heating-side control portion 4 performs operations for detecting whether or not a proper load is placed on the top plate 5, by periodically operating the inverter 3 at predetermined time intervals Ta. If the heating-side control portion 4 determines that a proper load has been placed thereon, the induction heating apparatus 1 performs operations for feeding electricity to the power receiving coil 7 in the non-contact power receiving device 6 which forms a load. Accordingly, when a proper load is placed on the top plate 5, the supply of electric power to the heating coil 7 is continued.

On the other hand, after the inverter 3 has been temporarily stopped, if the state is not changed during the periodic detecting operations at the predetermined time intervals Ta, namely if the heating-side control portion 4 determines that no load is placed on the top plate 5 or a proper load is not placed thereon, the temporality-stopped state of the inverter 3 is continued.

Accordingly, since the power-reception side control portion 9 in the non-contact power receiving device 6 controls the opening/closing operations of the changeover portion 8, it is possible to control the release and the continuation of the temporarily-stopped state of the inverter 3 in the induction heating apparatus 1. As a result thereof, through the power-reception side control portion 9 in the non-contact power receiving device 6, it is possible to control the amount of electric power supplied to the non-contact power receiving device 6 from the induction heating apparatus 1.

Further, although the non-contact power receiving device according to the second embodiment employs changeover means such as a relay or a semiconductor switch, as the changeover portion 8, the present invention is not limited to this structure and also can employ any component having the same changeover functions thereas.

Further, the heating-side control portion 4 is enabled to determine the presence or absence of a load, such as the presence or absence of the receiving plate 12 or the presence or absence of the non-contact power receiving device 6, for example, based on a combination of various parameters, such as the input electric current flowing through the inverter 3, an electric current and a voltage which are generated in the heating coil 2, the conduction time periods of the semiconductor switches in the inverter 3, and the frequency of the semiconductor switches. In the structure according to the second embodiment, the method for detecting the presence or absence of a load, such as the presence or absence of the receiving plate or the presence or absence of the non-contact power receiving device, is not particularly limited and can be any methods using a value detected within the induction heating apparatus. Thus, with the structure according to the second embodiment, it is possible to utilize no-load detecting functions / improper-load detecting functions which have been utilized in ordinary induction heating apparatuses.

The non-contact power receiving device 6 according to the second embodiment is provided with a temperature detection portion 13 near the receiving plate 12. The power-reception side control portion 9 in the non-contact power receiving device 6 controls the opening and closing of the changeover portion 8 for controlling the electric power supplied from the induction heating apparatus 1, such that the temperature detected by the temperature detection portion 13 changes within a constant temperature range.

In the non-contact power transmission device according to the second embodiment, when electric power is supplied to the non-contact power receiving device 6 from the induction heating apparatus 1, there is no need for transfer of control signals from the non-contact power receiving device 6 to the induction heating apparatus 1. Therefore, as the induction heating apparatus in the non-contact power transmission device according to the second embodiment, it is possible to employ various types of induction heating apparatuses, without depending on the types of such apparatuses. Accordingly, the non-contact power receiving device 6 in the non-contact power transmission device is enabled to employ various types of induction heating apparatuses, as feeding apparatuses, and, thus, is made to have general versatility.

Further, the non-contact power transmission device according to the second embodiment is adapted to transmit electric power through the heating coil 2 and the power receiving coil 7 and, therefore, enables a user to reduce the maximum electric power by preliminarily setting the value of the electric power supplied from the induction heating apparatus 1 to be a lower value and, also, enables the user to reduce temperature changes by narrowing the temperature control range.

Further, the non-contact power receiving device 6 according to the second embodiment is structured to inductively heat the receiving plate 12, which offers the advantage of fast temperature rises in the receiving plate 12, the advantage of ease of cleaning of the non-contact power receiving device 6 due to nonexistence of convexity and concavity within the room of the non-contact power receiving device 6.

As described above, in the non-contact power receiving device 6 which is supplied with electric power from the induction heating apparatus 1, according to the second embodiment, between the power receiving coil 7 and the power-reception side heating coil 14, there is provided the changeover portion 8 for opening and closing the connection between the power receiving coil 7 and the power-reception side heating coil 14. When the non-contact power receiving device 6 is supplied with electric power from the induction heating apparatus 1, the power receiving coil 7 is placed at a position faced to the heating coil 2 in the induction heating apparatus 1, and the power-reception-side control portion 9 in the non-contact power receiving device 6 utilizes heating stop states in the event of no-load detections through no-load detecting functions / improper-load detecting functions in the induction heating apparatus 1 and, also, controls the opening/closing operations of the changeover portion 8 within a time interval during which the induction heating apparatus 1 can perform reactivation operations. Thus, with the structure of the non-contact power transmission device according to the second embodiment, even in cases of employing an ordinary induction heating apparatus as a feeding apparatus, it is possible to adjust the amount of electric power received therefrom. Therefore, with the structure according to the second embodiment, it is possible to reduce the restrictions imposed on the types of induction heating apparatus which can be used therewith. This can realize a non-contact power receiving device with excellent usability.

### (Third Embodiment)

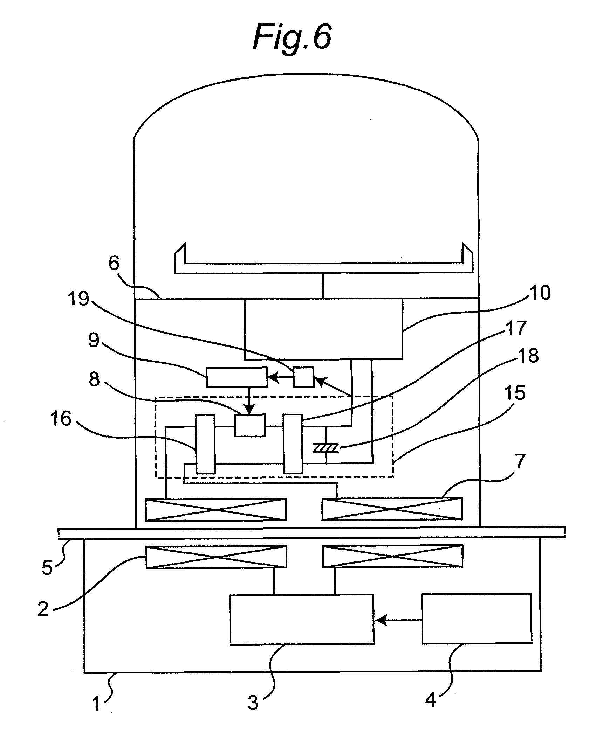

Hereinafter, there will be described a non-contact power receiving device and a non-contact power transmission device according to a third embodiment of the present invention, with reference to the drawings. Fig. 6 is a view illustrating, in a block diagram manner, the structures of the non-contact power receiving device and the non-contact power transmission device according to the third embodiment of the present invention. The structure according to the third embodiment is different from those of the first and second embodiments, in that the non-contact power receiving device includes a power receiving coil 7 which is connected to a load device 10 with a power supply circuit 15 interposed therebetween, and in that a changeover portion 8 is provided in the power supply circuit 15.

In the non-contact power receiving device according to the third embodiment, the power supply circuit 15 includes a rectification portion 16 for rectifying the voltage from the power receiving coil 7, a voltage buck/boost portion 17 for controlling the output from the rectification portion 16 to a predetermined voltage value, a smoothing portion 18 for smoothing the voltage outputted to the load device 10, and a voltage detection portion 19 for detecting the voltage outputted to the load device 10.

Next, there will be described the non-contact power transmission device which employs the induction heating apparatus 1 as a feeding apparatus and, further, includes the non-contact power receiving device 6 having the aforementioned structure according to the third embodiment, which is mounted on the induction heating apparatus 1, with respect to operations and effects thereof.

In the induction heating apparatus 1, a heating-side control portion 4 converts electric power supplied from an AC power supply, which is not illustrated, into high-frequency electric power with frequencies of 20 kHz to 100 kHz, using the semiconductor switches in an inverter 3, and the high-frequency electric power resulted from the conversion is supplied to a heating coil 2. The high-frequency electric power supplied to the heating coil 2 is transmitted to the power receiving coil 7 in the non-contact power reception device 6.

In the power supply circuit 15, the high-frequency electric power inputted thereto from the power receiving coil 7 is rectified by the rectification portion 16, and the rectified electric power is inputted to the voltage buck/boost portion 17. The voltage buck/boost portion 17 creates a voltage having a required voltage value, and this voltage is smoothed by the smoothing portion 18 into a desired DC voltage, which is outputted to the load circuit 10.

When the DC voltage is created as described above, the voltage detection portion 19 detects the output voltage (the voltage from the smoothing portion 18) and the voltage from the rectification portion 16, and the power-reception side control portion 9 controls the operations of the voltage buck/boost portion 17 such that the output voltage has a preset constant value and, further, the power-reception side control portion 9 controls the opening/closing operations of the changeover portion 8 such that the voltage from the rectification portion 16 changes within a predetermined voltage range.

When the changeover portion 8 is in a closed state, the electric power is transmitted to the power supply circuit 15. On the other hand, when the changeover portion 8 is in an opened state, the heating-side control portion 4 in the induction heating apparatus 1 determines that no load is placed on the top plate 5 or a proper load is not placed thereon and, thus, the heating-side control portion 4 temporarily stops the inverter 3.

After the inverter 3 has been temporarily stopped as described above, the heating-side control portion 4 performs operations for detecting whether or not a load is properly placed on the top plate 5, by periodically operating the inverter 3 at predetermined time intervals Ta. If the heating-side control portion 4 determines that a proper load has been placed thereon, during the periodic detecting operations, it performs operations for feeding electricity to the power receiving coil 7 in the non-contact power receiving device 6 which forms a load. Accordingly, when a proper load is placed on the top plate 5, the supply of electric power to the power receiving coil 7 is continued.

On the other hand, after the inverter 3 has been temporarily stopped, if the state is not changed during the periodic detection operations at the predetermined time intervals Ta, namely if the heating-side control portion 4 determines that no load is placed on the top plate 5 or a proper load is not placed thereon, the temporality-stopped state of the inverter 3 is continued.

Accordingly, since the power-reception side control portion 9 in the non-contact power receiving device 6 controls the opening/closing operations of the changeover portion 8, it is possible to control the release and the continuation of the temporarily-stopped state of the inverter 3 in the induction heating apparatus 1. As a result thereof, through the power-reception side control portion 9 in the non-contact power receiving device 6, it is possible to control the amount of electric power supplied to the non-contact power receiving device 6 from the induction heating apparatus 1.

Further, although the non-contact power receiving device according to the third embodiment employs changeover means such as a relay or a semiconductor switch, as the changeover portion 8, the present invention is not limited to this structure and also can employ any component having the same functions thereas.

Further, in the third embodiment, the heating-side control portion 4 is structured to determine the presence or absence of a load, such as the presence or absence of the non-contact power receiving device 6, for example, based on a combination of various parameters, such as the input electric current flowing through the inverter 3, an electric current and a voltage which are generated in the heating coil 2, the conduction time periods of the semiconductor switches in the inverter 3, and the frequency of the semiconductor switches. In the structure according to the third embodiment, the method for detecting the presence or absence of a load, such as the presence or absence of the non-contact power receiving device, is not particularly limited and can be any methods using a value detected within the induction heating apparatus. Thus, in the structure according to the third embodiment, it is possible to utilize no-load detecting functions /improper-load detecting functions which have been utilized in ordinary induction heating apparatuses.

### [Output Voltage Control Operations]

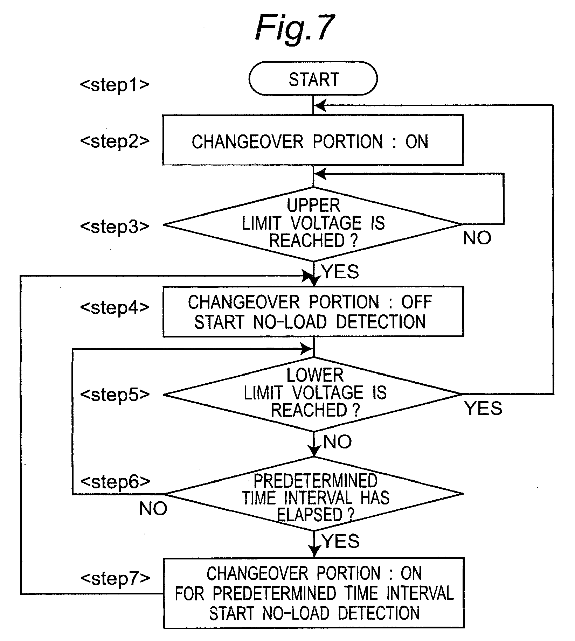

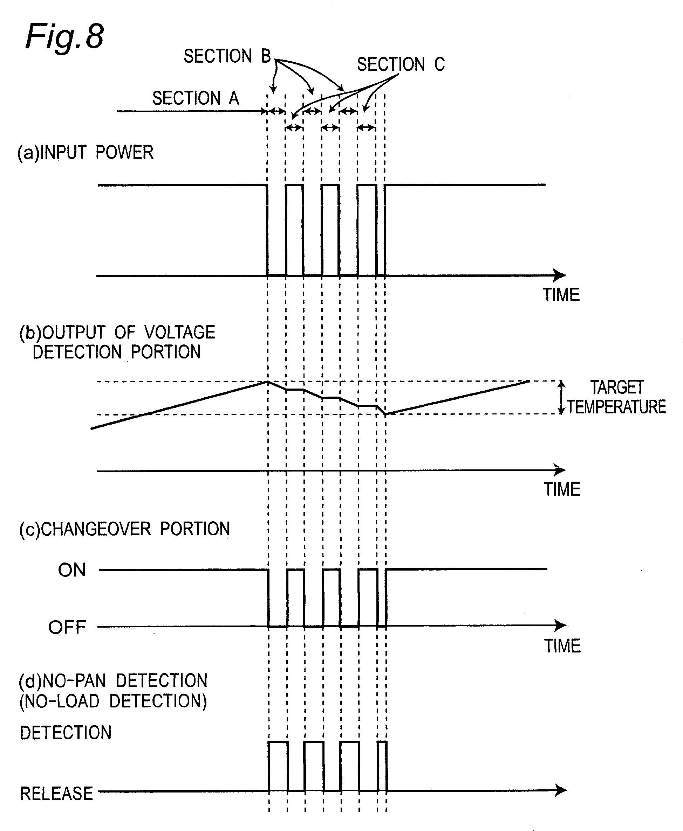

Next, with reference to Figs. 7 and 8, operations for output-voltage control according to the third embodiment will be described. Fig. 7 is a flow chart illustrating operations of the non-contact power receiving device 6 during output-voltage control, according to the third embodiment. Fig. 8 is waveform diagrams in respective portions in the non-contact power receiving device 6 according to the third embodiment, illustrating the changes of respective control values with time.

In Fig. 8, (a) is the waveform diagram illustrating the change of the electric power inputted from the induction heating apparatus 1, (b) is the waveform diagram illustrating the voltage from the rectification portion 16 which is detected by the voltage detection portion 19, (c) is the waveform diagram illustrating the state of the opening/closing operations of the changeover portion 8, and (d) is the waveform diagram illustrating the state of the no-load detecting function (no-pan detecting function) executed by the heating-side control portion 4.

At first, if the non-contact power receiving device 6 is placed on the induction heating apparatus 1, the induction heating apparatus 1 starts operating (step 1). At this time, the changeover portion 8 is in a closed state (ON state), thereby realizing a feeding state where the power supply circuit 15 is supplied with electric power (step 2 ; section A).

In the power supply circuit 15, the voltage buck/boost portion 17 creates a predetermined voltage, and the smoothing portion 18 supplies a desired dc voltage to the load device 10. At this time, when the load device 10 consumes a smaller amount of electric power or when the load device 10 is not connected thereto, the electric power supplied from the power receiving coil 7 exceeds the consumed electric power and, therefore, the voltage from the rectification portion 16 reaches an upper limit value in a permissible voltage range (step 3).

If the voltage detected by the voltage detection portion 19 reaches the upper limit value in the permissible voltage range, the power-reception side control portion 9 brings the changeover portion 8 into an opened state (OFF state). In this state, in the induction heating apparatus 1, the heating-side control portion 4 determines that a proper load does not exist on the top plate 5 and, thus, brings the inverter 3 into a temporarily-stopped state (feeding stop state) (step 4 ; section B).

When the inverter 3 is in the temporarily-stopped state in the induction heating apparatus 1, if the voltage detected by the voltage detection portion 19 reaches a lower limit value in the permissible voltage range, the power-reception side control portion 9 brings the changeover portion 8 into a closed state, thereby causing the inverter 3 in the induction heating apparatus 1 to restart operating (in a feeding state) (step 5). As described above, the heating-side control portion 4 detects whether or not a load is properly placed, by operating the inverter 3 at a period of a predetermined time interval Ta (for example, 2 seconds), within a constant time interval Tb (for example, 1 minute) during which the induction heating apparatus can be activated again (Ta<Tb).

In the non-contact power receiving device 6, after the elapse of a predetermined time interval Tc (Ta<Tc<Tb) (step 6), the power-reception side control portion 9 brings the changeover portion 8 into a closed state for a predetermined time interval Td which has been preliminarily determined. Since the changeover portion 8 is brought into the closed state as described above, the heating-side control portion 4 in the induction heating apparatus 1 is caused to determine that a proper load has been placed and, thus, is caused to supply electric power (step 7 ; section C).

In the step 7, if the power supply state is continued for a longer time period, the voltage detected from the rectification portion 16 exceeds the upper limit value in the permissible range, again. Therefore, the changeover portion 8 is adapted to be brought into the closed state only for the predetermined time interval Td. After the elapse of the predetermined time interval Td since the heating-side control portion 4 determined that a proper load had been placed and started the supply of electric power, the changeover portion 8 is brought into an opened state (from step 7 to step 4). Further, the predetermined time interval Tc for which the changeover portion 8 is brought into an opened state is 5 to 6 seconds, for example. The predetermined time interval Td for which the changeover portion 8 is brought into a closed state is 2 to 3 seconds, for example.

As described above, the non-contact power receiving device 6 according to the third embodiment is adapted to bring the changeover portion 8 into a closed state, at a constant period, at predetermined time intervals, which realizes a state where the induction heating apparatus 1 continuously performs operations without being completely stopped running. Further, in the non-contact power receiving device 6 according to the third embodiment, during the opening/closing operations of the changeover portion 8, the time intervals for which it is in the opened state are set to occupy a larger part thereof, so that the voltage from the rectification portion 16 gradually decreases and, finally, reaches the lower limit value in the permissible range. Therefore, in the non-contact power transmission device according to the third embodiment, if the value of the voltage detected by the voltage detection portion 19 reaches the lower limit value in the permissible range, the changeover portion 8 is brought into a closed state, thereby causing the induction heating apparatus 1 to perform continuous power supply operations.

Accordingly, in the non-contact power transmission device according to the third embodiment, the value of the voltage from the rectification portion 16 is controlled within a constant range, which can make the output voltage from the voltage buck/boost portion 17 have a constant value.

As described above, the non-contact power transmission device according to the third embodiment has the excellent characteristic of being capable of voltage control only through control in the non-contact power receiving device 6, due to the use of the power-reception-side control portion 9, the power supply circuit 15 and the voltage detection portion 19 in the non-contact power receiving device 6. Further, the non-contact power receiving device according to the third embodiment utilizes functions (no-load detecting functions / improper-load detecting functions) which have been provided in the ordinary induction heating apparatus 1, which facilitates output-voltage control in the non-contact power receiving device 6.

Further, in the non-contact power receiving device 6 according to the third embodiment, the load device is not particularly limited and can be any appliance which is driven by DC voltages, such as a motor appliance, a rechargable battery, and the like.

Further, with the non-contact power receiving device 6 according to the third embodiment, when the load device has a larger output, the user can adjust the input voltage from the induction heating apparatus 1, namely he or she can make the set value to be a larger value, in order to obtain desired outputs.

As described above, in the non-contact power transmission device according to the third embodiment, the non-contact power receiving device 6 includes the power supply circuit 15 between the power receiving coil 7 and the load device 10, the power supply circuit 15 is provided with the changeover portion 8, and the power-reception side control portion 9 in the non-contact power receiving device 6 is structured to utilize heating stop states based on no-load detection/improper-load detection in the induction heating apparatus 1. Further, in the non-contact power receiving device 6 according to the third embodiment, the power receiving coil 7 in the non-contact power receiving device 6 is placed at a position faced to the heating coil 2 in the induction heating apparatus 1 and, in states where the non-contact power receiving device 6 is supplied with electric power from the induction heating apparatus 1, the changeover portion 8 is caused to perform opening and closing operations within a time interval during which the induction heating apparatus 1 can perform reactivation operations, which enables adjustments of the amount of electric power, even when it is on an induction heating apparatus for general purpose use. Therefore, with the structure of the non-contact power receiving device according to the third embodiment, it is possible to reduce the restrictions imposed on the type of the induction heating apparatus to be used as the feeding apparatus. This can realize a power receiving device with excellent general versatility and excellent usability.

### (Fourth Embodiment)

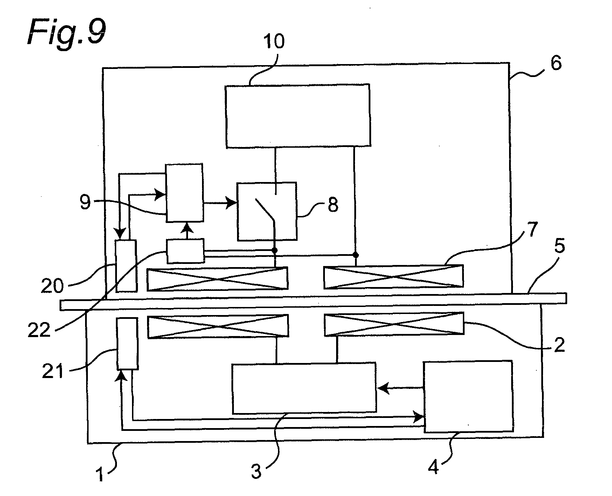

Hereinafter, there will be described a non-contact power transmission device according to a fourth embodiment of the present invention, with reference to Fig. 9. Fig. 9 is a view illustrating, in a block diagram manner, the structure of the non-contact power transmission device according to the fourth embodiment.

As illustrated in Fig. 9, the non-contact power transmission device is constituted by an induction heating apparatus 1 used as a feeding-apparatus/heating-apparatus, and a non-contact power receiving device 6 which is placed on the induction heating apparatus 1 and is supplied with electric power therefrom. The induction heating apparatus 1 used as the feeding apparatus includes a top plate 5 which forms a top surface and is made of a crystalized glass and the like, a heating coil (primary coil) which forms a feeding coil and is placed below the top plate 5, an inverter 3 for supplying high-frequency electric power to the heating coil 2, a heating-side control portion 4 adapted to control semiconductor switches in the inverter 3, and a heating-side transmission/reception portion 21 adapted to transmit and receive predetermined signals to and from the non-contact power receiving device 6. The heating-side transmission/reception portion 21 is adapted to transmit and receive predetermined signals, such as identification signals, to and from a power-reception-side transmission/reception portion 20 provided in the non-contact power receiving device 6. Further, although not illustrated, the induction heating apparatus 1 includes a manipulation portion which enables manipulations for controlling the amount of electricity supplied to the heating coil 2, the time period for which electricity is supplied thereto. Further, the induction heating apparatus 1 includes a display portion adapted to display set states having been set through the manipulation portion, the remaining time period out of the set time period.

On the other hand, the non-contact power receiving device 6 includes a power receiving coil (secondary coil) 7 which is supplied with a high-frequency magnetic field from the heating coil (the primary coil) 2, a load device 10 which is supplied with electric power generated in the power receiving coil 7, a changeover portion 8 adapted to open and close the connection between the power receiving coil 7 and the load device 10, the power-reception-side transmission/reception portion 20, a control power-supply circuit 22 connected to the power receiving coil 7, and a power-reception side control portion 9. The power-reception-side transmission/reception portion 20 is enabled to transmit and receive predetermined signals, such as identification signals, to and from the heating-side transmission/reception portion 21. Further, the power-reception side control portion 9 is adapted to control the changeover portion 8 and the power-reception-side transmission/reception portion 20, when electric power from the control power-supply circuit 22 is inputted to the power-reception side control portion 9.

Next, the non-contact power transmission device having the aforementioned structure according to the fourth embodiment will be described, with respect to operations and effects thereof.

The non-contact power receiving device 6 is placed on the top plate 5, such that the power receiving coil 7 faces the heating coil 2 in the induction heating apparatus 1. In the state where the non-contact power receiving device 6 is placed on the induction heating apparatus 1, if the induction heating apparatus 1 is activated by manipulating the manipulation portion in the induction heating apparatus 1, the heating-side control portion 4 operates the inverter 3 with lower electric power, thereby supplying a high-frequency magnetic field from the heating coil 2 to the non-contact power receiving device 6. The heating-side control portion 4 causes the heating-side transmission/reception portion 21 to generate predetermined signals, such as identification signals.

The heating-side control portion 4 determines whether the load placed on the top plate 5 is foreign matter such as a spoon, a pan which is not suitable for being heated or a pan which can be heated, or whether there is no load thereon, based on electric characteristics such as the input electric current to the inverter 3, the electric current in the heating coil 2, the voltage generated in the heating coil 2. When there is no load or when there is an improper load, such as foreign matter such as a spoon, a pan which is not suitable for being heated, the heating-side control portion 4 stops running and, further, displays this fact on the display portion for notifying the user thereof. If the heating-side control portion 4 determines that the load placed on the top plate 5 is a metal container, such as a pan suitable for being heated, the heating-side control portion 4 enables the induction heating apparatus 1 to perform heating at a maximum output.

In the non-contact power receiving device 6, the power receiving coil 7 is supplied with the high-frequency magnetic field from the heating coil 2 in the induction heating apparatus 1 and, further, the control power-supply circuit 22 converts electric power generated in the power receiving coil 7 into desired electric power, which is supplied to the power-reception side control portion 9. If the power-reception-side transmission/reception portion 20 receives a predetermined signal from the heating-side transmission/reception portion 21, the power-reception side control portion 9 operates the changeover portion 8 to change over the connection between the power receiving coil 7 and the load device 10 to a closed state, thereby enabling the load device 10 to operate. At this time, the power-reception-side transmission/reception portion 20 transmits, to the heating-side transmission/reception portion 21, a predetermined signal such as an identification signal containing information about the appliance.

The heating-side control portion 4 in the induction heating apparatus 1 determines the type of the non-contact power receiving device 6, from the predetermined signal received by the heating-side transmission/reception portion 21. Further, the heating-side control portion 4 converts electric power supplied from an AC power supply, which is not illustrated, into high-frequency electric power with frequencies of 20 kHz to 100 kHz, using semiconductor switches in an inverter 3, and high-frequency electric power as an output according to the type of the non-contact power receiving device 6 is supplied to the power receiving coil 7 from the heating coil 2. For example, in cases where the load device 10 is a motor, and the non-contact power receiving device 6 has a relatively-lower output and is driven at 100 W, the high-frequency electric power from the heating coil 2 is set to be a relatively-lower output, in order to enable the power receiving coil 7 to receive electric power required by the load device 10. Further, in cases where the load device 10 is a heater, and the non-contact power receiving device 6 has a relatively-higher output and requires electric power of about 1000 W, the high-frequency electric power from the heating coil 2 is set to be a relatively-higher output, in order to enable the power receiving coil 7 to receive electric power required by the load device 10. Namely, the induction heating apparatus 1 is adapted to output high-frequency electric power according to the type of the non-contact power receiving device 6.

Further, the heating-side control portion 4 in the induction heating apparatus 1 changes the settings of the manipulation portion and, also, changes the display on the display portion in the induction heating apparatus 1, according to the type of the non-contact power receiving device 6, in order to enable manipulations of the non-contact power receiving device 6 through the manipulation portion in the induction heating apparatus 1, for example, in order to enable manipulations for "High", "Medium", "Low", "Stop". If the user manipulates the manipulation portion based on the display on the display portion, the output from the heating coil 2 is controlled according to the manipulation, thereby changing the running state of the non-contact power receiving device 6.

In cases where the load device 10 is a motor, for example, the power-reception side control portion 9 in the non-contact power receiving device 6 determines the running state, based on voltage changes therein. Further, in cases where the load device 10 is a heater, for example, the power-reception side control portion 9 determines the running state, based on temperature changes. Further, the power-reception side control portion 9 causes the power-reception side transmission/reception portion 20 to output signals for increasing or decreasing the high-frequency electric power from the heating coil 2 or for stopping the running. At this time, the heating-side control portion 4 in the induction heating apparatus 1 can control the high-frequency electric power supplied from the heating coil 2, based on the signals received by the heating-side transmission/reception portion 21.

Further, as described in the aforementioned first to third embodiments, in the non-contact power receiving device and the non-contact power transmission device according to the fourth embodiment, the opening/closing operations of the changeover 8 can be controlled, thereby controlling the electricity supplied to the load device 10. Since the non-contact power receiving device and the non-contact power transmission device according to the fourth embodiment have this structure, they are capable of performing the same operations as those of the non-contact power receiving devices and the non-contact power transmission devices according to the first to third embodiments, thereby offering the same effects.

If the power-reception-side transmission/reception portion 20 in the non-contact power receiving device 6 receives no predetermined signal from the heating-side transmission/reception portion 21, the power-reception side control portion 9 does not change over the changeover portion 8 into a closed state, so that the electric characteristics of the inverter 3, from which the heating-side control portion 4 in the induction heating apparatus 1 determines the load, are hardly changed, and, therefore, the heating-side control portion 4 determines that there is no load or there is a load which is not suitable for being heated and, thus, stops the running.

Further, although the non-contact power receiving device 6 according to the fourth embodiment is structured such that the power-reception-side transmission/reception portion 20 transmits predetermined signals through the electric power from the control power-supply circuit 22 connected to the power receiving coil 7, it is also possible to offer the same effects, even with a structure employing a power supply which is independent of the power receiving coil 7, such as a battery.

In the non-contact power transmission device according to the fourth embodiment, the induction heating apparatus 1 is provided with the heating-side transmission/reception portion 21, and the non-contact power receiving device 6 is provided with the power-reception-side transmission/reception portion 20, in such a way as to enable the heating-side transmission/reception portion 21 and the power-reception-side transmission/reception portion 20 to transmit and receive predetermined signals therebetween, in order to enable complicated control through transmission and reception of signals between the induction heating apparatus 1 and the non-contact power receiving device 6. However, it is also possible to select various types of control methods. In the non-contact power transmission device according to the fourth embodiment, it is necessary only that the changeover portion 8 be changed over to a closed state, at least if the non-contact power receiving device 6 receives a signal from the induction heating apparatus 1.

As described above, in the non-contact power transmission device according to the fourth embodiment, in order to enable the non-contact power receiving device 6 to be supplied with the high-frequency magnetic field generated in the induction heating apparatus 1, the non-contact power receiving device 6 is provided with the changeover portion 8 between the power receiving coil 7 and the load device 10, and the changeover portion 8 is brought into a closed state, thereby causing the power receiving coil 7 and the load device 10 to be connected to each other, only if the receiving means in the non-contact power receiving device 6 receives a predetermined signal from the induction heating apparatus 1. Therefore, with the non-contact power transmission device according to the fourth embodiment, even in cases of employing a feeding apparatus other than induction heating apparatuses having the functions of transmitting predetermined signals, and in cases where the non-contact power receiving device 6 has electric characteristics similar to those of a pan, the non-contact power receiving device 6 is prevented from operating. This realizes a power transmission device with excellent safety and usability.

Further, although the non-contact power transmission device according to the fourth embodiment has been described with respect to an example where the non-contact power receiving device is provided with the power-reception-side transmission/reception portion 20, and the induction heating apparatus as the feeding apparatus is provided with the heating-side transmission/reception portion 21, the present invention is not limited to this structure. For example, in cases where the power-reception side control portion is adapted to control opening and closing of the changeover portion if the non-contact power receiving device receives a predetermined signal, such as an identification signal, which has been transmitted from the induction heating apparatus, it is also possible to cope therewith, by providing at least a heating-side transmission portion in the induction heating apparatus and, also, providing at least a power reception-side receiving portion in the non-contact power receiving portion.

As described above, in the non-contact power transmission device according to the fourth embodiment, if the power receiving device is supplied with electric power from a feeding apparatus other than feeding apparatus having the functions of transmitting predetermined signals, the changeover portion is prevented from being changed over to a closed state, which prevents the power receiving device from being activated. Therefore, it forms a non-contact power transmission device with excellent reliability, safety and usability.

In the non-contact power transmission device according to the fourth embodiment, the changeover portion 8 is provided between the load device 10 and the power receiving coil 7 which is supplied with the high-frequency magnetic field generated from the induction heating apparatus 1 as the feeding apparatus, and the changeover portion 8 is brought into a closed state, thereby connecting the power receiving coil 7 and the load device 10 to each other, only if the receiving means in the non-contact power receiving device 6 receives signals from the induction heating apparatus 1. Therefore, with the structure according to the fourth embodiment, even in cases where an apparatus other than induction heating apparatuses having predetermined functions is employed as a feeding apparatus, and in cases where the non-contact power receiving device has electric characteristics similar to those of a pan, the changeover portion is prevented from being changed over into a closed state, which prevents the non-contact power receiving device from performing power receiving operations. This can realize a power transmission device with excellent safety and usability.

### (Fifth Embodiment)

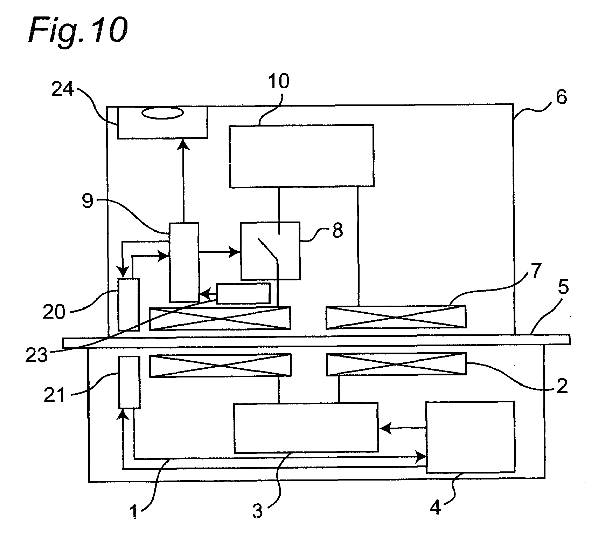

Hereinafter, there will be described a non-contact power transmission device according to a fifth embodiment of the present invention, with reference to Fig. 10. Fig. 10 is a view illustrating, in a block diagram manner, the structure of the non-contact power transmission device according to the fifth embodiment. The non-contact power transmission device according to the fifth embodiment is different from the non-contact power transmission device according to the aforementioned fourth embodiment, in that it includes a high-frequency magnetic-field detection portion for detecting an induction heating apparatus as a feeding apparatus which is operating, and a display portion for displaying operating states and the like of the induction heating apparatus.

In the non-contact power transmission device according to the fifth embodiment, if a user inputs a command for starting operations to a manipulation portion in the induction heating apparatus 1, a heating-side control portion 4 converts electric power supplied from an AC power supply, which is not illustrated, into high-frequency electric power with frequencies of 20 kHz to 100 kHz, using semiconductor switches in an inverter 3, and the high-frequency electric power resulted from the conversion is supplied to a heating coil 2. In the state of the start of operations, the high-frequency electric power supplied to the heating coil 2 starts supply of low-output high-frequency electric power to the power receiving coil 7 in the non-contact power receiving device 6.

In the state of the start of operations, where the low-output high-frequency electric power is supplied thereto as described above, if a power-reception-side transmission/reception portion 20 in the non-contact power receiving device 6 receives a predetermined signal from a heating-side transmission/reception portion 21 in the induction heating apparatus 1, the same operations as the feeding operations described in the aforementioned in the fourth embodiment are performed.

Further, in the state of the start of operations, where the low-output high-frequency electric power is supplied thereto, when the power-reception-side transmission/reception portion 20 in the non-contact power receiving device 6 has received no predetermined signal from the heating-side transmission/reception portion 21 in the induction heating apparatus 1, if the high-frequency magnetic-field detection portion 23 provided in the non-contact power receiving device 6 detects a high-frequency magnetic field being supplied thereto from the induction heating apparatus 1, the power-reception side control portion 9 in the non-contact power receiving device 6 determines that a feeding apparatus other than the induction heating apparatus 1 having the function of transmitting predetermined signals is used, and further, the power-reception side control portion 9 causes the display portion 24 provided in the non-contact power receiving device 6 to display the fact that this feeding apparatus is an improper appliance.

Since the display portion 24 is caused to display the fact that the appliance used as the feeding apparatus is improper, as described above, it is possible to certainly notify the user of the improper use of the feeding apparatus. Further, the power-reception-side control portion 9 maintains the changeover portion 8 at an opened state, and, therefore, the heating-side control portion 4 in the induction heating apparatus 1 determines that there is no load or there is a load which is not suitable for being heated and, thus, the heating-side control portion 4 stops the power feeding operation of the induction heating apparatus 1.

Further, as the high-frequency magnetic-field detection portion 23 provided in the non-contact power receiving device 6, it is possible to employ a system adapted to detect a high-frequency magnetic field through detections of the output from the power receiving coil 7, a system adapted to detect a high-frequency magnetic field with a dedicated coil provided therein, and the like. However, it is not particularly limited in the structure according to the fifth embodiment.

In the non-contact power transmission device according to the fifth embodiment, if the high-frequency magnetic-field detection portion 23 detects a high-frequency magnetic field and, also, the power-reception-side transmission/receiving portion 20 detects no predetermined signal from the induction heating apparatus used as a feeding apparatus, the power-reception side control portion 9 causes the display portion 24 to display the fact of improper use thereof. Accordingly, with the structure according to the fifth embodiment, it is possible to allow the user to recognize whether or not the induction heating apparatus used as the feeding apparatus is proper. This can realize a non-contact power transmission device with excellent reliability, safety and usability.

### Industrial Applicability

The non-contact power receiving device and the non-contact power transmission device according to the present invention is capable of adjusting the amount of electric power even in cases of employing an induction heating apparatus for general purpose use as a feeding apparatus, which can reduce restrictions imposed on the form of the induction heating apparatus used as a feeding power supply. Therefore, the non-contact power receiving device and the non-contact power transmission device according to the present invention are effectively applicable to outdoor uses and the like, by using batteries as power supplies. Further, the non-contact power receiving device is applicable to electric appliances including motors, such as mixers, electric appliances including heaters, such as hot-water heaters and roasters, and various types of power receiving devices adapted to receive electric power in non-contact manners, such as illumination tools, irons.

### Reference Signs List

- 1: Induction heating apparatus
- 2: Heating coil
- 3: Inverter
- 4: Heating-side control portion
- 5: Top plate
- 6: Non-contact power receiving device
- 7: Power receiving coil
- 8: Changeover portion
- 9: Power-reception side control portion
- 10: Load device
- 11: Heater
- 12: Receiving plate
- 13: Temperature detection portion
- 14: Power-reception side heating coil
- 15: Power supply circuit
- 16: Rectification portion
- 17: Voltage buck/boost portion
- 18: Smoothing portion
- 19: Voltage detection portion
- 20: Power-reception-side transmission/reception portion
- 21: Heating-side transmission/reception portion
- 22: Power supply circuit
- 23: High-frequency magnetic-field detection portion
- 24: Display portion

## Claims

1. A non-contact power receiving device (6) comprising:
a power receiving coil (7) adapted to output electric power by receiving a high-frequency magnetic field from an induction heating apparatus (1) used as a feeding apparatus;
a load device (10) adapted to be supplied with the electric power from the power receiving coil; **characterised by**
a changeover portion (8) adapted to open and close a connection between the power receiving coil and the load device; and
a power-reception-side control portion (9) adapted to control an opening/closing operation of the changeover portion;
wherein
the power-reception-side control portion is adapted to control the opening/closing operation of the changeover portion, in order to adjust the electric power supplied to the load device from the power receiving coil; and further **characterised in that**
the power-reception-side control portion is adapted to set an opening time interval, during the opening/closing operation of the changeover portion, to be within a time interval during which the induction heating apparatus used as the feeding apparatus can be reactivated.

2. The non-contact power receiving device according to Claim 1,
wherein the power-reception-side control portion (9) is adapted to set the opening time interval to be longer than a closing time interval, during the opening/closing operation of the changeover portion, in order to adjust the electric power supplied to the load device (10) from the power receiving coil (7).

3. The non-contact power receiving device according to Claim 1 or 2,
wherein the power-reception-side control portion (9) is adapted to bring the changeover portion (8) into an opened state for bringing the induction heating apparatus (1) into a heating stop state and, thereafter, bring the changeover portion into a closed state for a constant time interval within a time interval during which the induction heating apparatus can be reactivated for restarting a heating operation of the induction heating apparatus, during the opening/closing operation of the changeover portion, in order to adjust the electric power supplied to the load device from the power receiving coil.

4. The non-contact power receiving device according to any one of Claims 1 to 3, wherein
the load device (10) is partially formed from a heater (11) for heating an object (12) to be heated,
there is provided a temperature detection portion(13) adapted to detect a temperature of the heater or the object to be heated by the heater,
the power-reception-side control portion (9) is adapted to control the opening/closing operation of the changeover portion (8) such that the temperature detected by the temperature detection portion reaches a predetermined temperature, for adjusting the electric power supplied to the load device from the power receiving coil (7).

5. The non-contact power receiving device according to any one of Claims 1 to 3, wherein
the load device (10) partially formed from a power-reception-side heating coil (14), and a heating portion (12) to be heated by the power-reception-side heating coil,
there is provided a temperature detection portion (13) adapted to detect a temperature of the heating portion,
the power-reception-side control portion (9) is adapted to control the opening/closing operation of the changeover portion (8) such that the temperature detected by the temperature detection portion reaches a predetermined temperature, for adjusting the electric power supplied to the load device from the power receiving coil (7).

6. The non-contact power receiving device according to any one of Claims 1 to 3, wherein
the load device (10) is partially formed from a power supply circuit (15),
there is provided a voltage detection portion (19) adapted to detect a voltage in the power supply circuit,
the power-reception-side control portion (9) is adapted to control the opening/closing operation of the changeover portion (8) such that the voltage detection portion reaches a predetermined voltage, for adjusting the electric power supplied to the load device from the power receiving coil (7).

7. A non-contact power transmission device comprising:
an induction heating apparatus (1) including a heating coil (2) for generating a high-frequency magnetic field and forming a feeding apparatus; and
a non-contact power receiving device (6) being placed on the induction heating apparatus and being adapted to create desired electric power by receiving the high-frequency magnetic field from the heating coil,
wherein
the non-contact power receiving device includes
a power receiving coil (7) adapted to output electric power by receiving the high-frequency magnetic field from the heating coil,
a load device (10) adapted to be supplied with electric power from the power receiving coil; **characterised by**
a changeover portion (8) adapted to open and close a connection between the power receiving coil and the load device, and
a power-reception-side control portion (9) adapted to control an opening/closing operation of the changeover portion, in order to adjust the electric power supplied to the load device from the power receiving coil, and further **characterised in that**
the power-reception-side control portion is adapted to set an opening time interval, during the opening/closing operation of the changeover portion, to be within a time interval during which the induction heating apparatus can be reactivated, in order to adjust the electric power supplied to the load device from the power receiving coil.

8. The non-contact power transmission device according to Claim 7,
wherein the power receiving coil (7) is placed at a position faced to the heating coil (2) in the induction heating apparatus (1), when the power receiving device (6) creates electric power by receiving the high-frequency magnetic field from the induction heating apparatus.

9. The non-contact power transmission device according to Claim 8,
wherein the power-reception-side control portion (9) is adapted to bring the changeover portion (8) into an opened state for bringing the induction heating apparatus (1) into a feeding stop state within a time interval during which the induction heating apparatus can be reactivated and, further, bring the changeover portion (8) into a closed state for a constant time interval for bringing the induction heating apparatus (1) into a feeding state, during the opening/closing operation of the changeover portion, in order to adjust the electric power supplied to the load device (10) from the power receiving coil (7).

## Patentansprüche

1. Kontaktlose Energieempfangsvorrichtung (6) umfassend:
eine Energie-empfangende Spule (7), die ausgebildet ist, durch Empfangen eines Hochfrequenzmagnetfeldes von einer Induktionserwärmungsvorrichtung (1), die als eine Speisungsvorrichtung verwendet wird, elektrische Energie auszugeben;
eine Lastvorrichtung (10), die ausgebildet ist, mit der elektrischen Energie von der Energie-empfangenden Spule versorgt zu werden, **gekennzeichnet durch**
ein Übergabeteil (8), das ausgebildet ist, eine Verbindung zwischen der Energie-empfangenden Spule und der Lastvorrichtung zu öffnen und zu schließen; und
ein Energie-empfangsseitiges Steuerteil (9), das ausgebildet ist, um eine Öffnen/Schließen-Operation des Übergabeteils zu steuern;
wobei das Energie-empfangsseitige Steuerteil ausgebildet ist, die Öffnen/Schließen-Operation des Übergabeteils zu steuern, um die elektrische Energie, die von der Energie-empfangenden Spule an die Lastvorrichtung geliefert wird, anzupassen; und ferner
**dadurch** gekennzeichnet, dass
das Energie-empfangsseitige Steuerteil ausgebildet ist, um ein Öffnungszeitintervall, während der Öffnen/Schließen-Operation des Übergabeteils so zu setzen, dass es innerhalb eines Zeitintervalls ist, während dem die Induktionserwärmungsvorrichtung, die als Speisevorrichtung benutzt wird, reaktiviert werden kann.

2. Kontaktlose Energieempfangsvorrichtung nach Anspruch 1,
wobei das Energie-empfangsseitige Steuerteil (9) ausgebildet ist, das Öffnungszeitintervall so zu setzen, dass es länger ist als ein Schließungszeitintervall, während der Öffnen/Schließen-Operation des Übergabeteils, um die elektrische Energie, die von der Energie-empfangenden Spule (7) an die Lastvorrichtung (10) geliefert wird, anzupassen.

3. Kontaktlose Energieempfangsvorrichtung nach Anspruch 1 oder 2,
wobei das Energie-empfangsseitige Steuerteil (9) ausgebildet ist, das Übergabeteil (8) in einen geöffneten Zustand zu bringen, um die Induktionserwärmungsvorrichtung (1) in einen Erwärmungsstoppzustand zu bringen und, danach, das Übergabeteil für ein konstantes Zeitintervall innerhalb eines Zeitintervalls, während dem die Induktionserwärmungsvorrichtung zum erneuten Starten einer Erwärmungsoperation der Induktionserwärmungsvorrichtung reaktiviert werden kann, in einen geschlossenen Zustand zu bringen, während der Öffnen/Schließen-Operation des Übergabeteils, um die elektrische Energie, die von der Energie-empfangenden Spule an die Lastvorrichtung geliefert wird, anzupassen.

4. Kontaktlose Energieempfangsvorrichtung nach einem der Ansprüche 1 bis 3, wobei
die Lastvorrichtung (10) teilweise von einem Erhitzter (11) zum Erhitzen eines zu erhitzen Objektes (12) gebildet wird,
ein Temperaturerfassungsteil (13) bereitgestellt wird, das ausgebildet ist, eine Temperatur des Erhitzers oder des durch den Erhitzer zu erhitzen Objektes zu erfassen,
das Energie-empfangsseitige Steuerteil (9) ausgebildet ist, die Öffnen/Schließen-Operation des Übergabeteils (8) zu steuern, so dass die Temperatur, die durch das Temperaturerfassungsteil erfasst wird, eine vorbestimmte Temperatur erreicht, zum Anpassen der elektrischen Energie, die der Lastvorrichtung von der Energie-empfangenden Spule (7) bereitgestellt wird.

5. Kontaktlose Energieempfangsvorrichtung nach einem der Ansprüche 1 bis 3, wobei
die Lastvorrichtung (10) teilweise von einer Energie-empfangsseitigen Heizspule (14) und einem Heizteil (12), zu erhitzen durch die Energie-empfangsseitige Heizspule, gebildet wird,
ein Temperaturerfassungsteil (13) bereitgestellt wird, das ausgebildet ist, eine Temperatur des Heizteils zu erfassen,
das Energie-empfangsseitige Steuerteil (9) ausgebildet ist, die Öffnen/Schließen-Operation des Übergabeteils (8) zu steuern, so dass die Temperatur, die durch das Temperaturerfassungsteil erfasst wird, eine vorbestimmte Temperatur erreicht, zum Anpassen der elektrischen Energie, die der Lastvorrichtung von der Energie empfangenden Spule (7) bereitgestellt wird.

6. Kontaktlose Energieempfangsvorrichtung nach einem der Ansprüche 1 bis 3, wobei
die Lastvorrichtung (10) teilweise von einem Energieversorgungschaltkreis (15) gebildet wird,
ein Spannungserfassungsteil (19) bereitgestellt wird, das ausgebildet ist, eine Spannung in dem Energieversorgungsschaltkreis zu erfassen,
das Energie-empfangsseitige Steuerteil (9) ausgebildet ist, die Öffnen/Schließen-Operation des Übergabeteils (8) so zu steuern, dass das Spannungserfassungsteil eine vorbestimmte Spannung erreicht, zum Anpassen der elektrischen Energie, die der Lastvorrichtung von der Energie empfangenden Spule (7) bereitgestellt wird.

7. Kontaktlose Energieübertragungsvorrichtung umfassend:
eine Induktionserwärmungsvorrichtung (1), die eine Heizspule (2) zum Erzeugen eines Hochfrequenzmagnetfeldes beinhaltet und eine Speisevorrichtung bildet; und
eine kontaktlose Energieempfangsvorrichtung (6), die auf der Induktionserwärmungsvorrichtung angeordnet und ausgebildet ist, eine gewünschte elektrische Energie durch Empfang des Hochfrequenzmagnetfeldes von der Heizspule zu erzeugen,
wobei
die kontaktlose Energieempfangsvorrichtung umfasst:
eine Energie-empfangende Spule (7), die ausgebildet ist, durch Empfangen des Hochfrequenzmagnetfeldes von der Heizspule elektrische Energie auszugeben;
eine Lastvorrichtung (10) die ausgebildet ist, mit der elektrischen Energie von der Energie-empfangenden Spule versorgt zu werden,
**gekennzeichnet durch**
ein Übergabeteil (8), das ausgebildet ist, eine Verbindung zwischen der Energie-empfangenden Spule und der Lastvorrichtung zu öffnen und zu schließen; und
ein Energie-empfangsseitiges Steuerteil (9), das ausgebildet ist, eine Öffnen/Schließen-Operation des Übergabeteils zu steuern, um die elektrische Energie, die von der Energie-empfangenden Spule an die Lastvorrichtung geliefert wird, anzupassen; und ferner
**dadurch** gekennzeichnet, dass
das Energie-empfangsseitige Steuerteil ausgebildet ist, um ein Öffnungszeitintervall, während der Öffnen/Schließen-Operation des Übergabeteils so zu setzen, dass es innerhalb eines Zeitintervalls ist, während dem die Induktionserwärmungsvorrichtung reaktiviert werden kann, um die elektrische Energie, die von der Energie-empfangenden Spule an die Lastvorrichtung geliefert wird, anzupassen.

8. Kontaktlose Energieübertragungsvorrichtung nach Anspruch 7,
wobei die Energie-empfangende Spule (7) an einer Position, die zu der Heizspule (2) zeigt, in der Induktionserwärmungsvorrichtung (1) angeordnet ist, wenn die Energieempfangsvorrichtung (6) durch Empfang des Hochfrequenzmagnetfeldes von der Induktionserwärmungsvorrichtung elektrische Energie erzeugt.

9. Kontaktlose Energieübertragungsvorrichtung nach Anspruch 8,
wobei das Energie-empfangsseitige Steuerteil (9) ausgebildet ist, das Übergabeteil (8) in einen geöffneten Zustand zu bringen, um die Induktionserwärmungsvorrichtung (1) innerhalb eines Zeitintervalls, während dem die Induktionserwärmungsvorrichtung reaktiviert werden kann, in einen Speisungsstoppzustand zu bringen und, ferner, das Übergabeteil (8) für ein konstantes Zeitintervall in einen geschlossenen Zustand zu bringen, um die Induktionserwärmungsvorrichtung (1) in einen Speisungszustand zu bringen, während der Öffnen-/Schließen-Operation des Übergabeteils, um die elektrische Energie, die von der Energie-empfangenden Spule (7) an die Lastvorrichtung (10) geliefert wird, anzupassen.

## Revendications

1. Dispositif de réception d'énergie sans contact (6) comprenant:
une bobine de réception d'énergie (7) adaptée pour délivrer de l'énergie électrique en recevant un champ magnétique à haute fréquence en provenance d'un dispositif de chauffage par induction (1) utilisé comme un dispositif d'alimentation;
un dispositif de charge (10) adapté pour être alimenté en énergie électrique en provenance de ladite bobine de réception d'énergie, **caractérisé par**
une partie de transfert (8) adaptée pour ouvrir et fermer une connexion entre la bobine de réception d'énergie et le dispositif de charge; et
une partie de commande (9) côté réception d'énergie adaptée pour commander une opération d'ouverture/de fermeture de la partie de transfert; dans lequel
ladite partie de commande côté réception d'énergie est adaptée pour commander l'opération d'ouverture/de fermeture de la partie de transfert afin d'adapter l'énergie électrique fournie au dispositif de charge à partir de ladite bobine de réception d'énergie; et, en outre,
**caractérisé par le fait que**
ladite partie de commande (9) côté réception d'énergie est adaptée pour définir un intervalle de temps d'ouverture, pendant l'opération d'ouverture/de fermeture de la partie de transfert, de telle manière qu'il se situe dans un intervalle de temps pendant lequel le dispositif de chauffage par induction utilisé comme dispositif d'alimentation peut être réactivé.

2. Dispositif de réception d'énergie sans contact selon la revendication 1,
dans lequel ladite partie de commande (9) côté réception d'énergie est adaptée pour définir l'intervalle de temps d'ouverture de telle manière qu'il est plus long qu'un intervalle de temps de fermeture, pendant l'opération d'ouverture/de fermeture de la partie de transfert, afin d'adapter l'énergie électrique fournie au dispositif de charge (10) à partir de ladite bobine de réception d'énergie (7).

3. Dispositif de réception d'énergie sans contact selon la revendication 1 ou 2,
dans lequel ladite partie de commande (9) côté réception d'énergie est adaptée pour faire passer la partie de transfert (8) à un état ouvert afin de faire passer le dispositif de chauffage par induction (1) à un état d'arrêt de chauffage et, ci-après, pour faire passer la partie de transfert à un état fermé pour un intervalle de temps constant à l'intérieur d'un intervalle de temps pendant lequel ledit dispositif de chauffage par induction peut être réactivé pour recommencer une opération de chauffage du dispositif de chauffage par induction, pendant l'opération d'ouverture/de fermeture de la partie de transfert, afin d'adapter l'énergie électrique fournie au dispositif de charge à partir de ladite bobine de réception d'énergie.

4. Dispositif de réception d'énergie sans contact selon l'une quelconque des revendications 1 à 3, dans lequel
le dispositif de charge (10) est formé en partie par un dispositif de chauffage (11) destiné à chauffer un objet (12) à chauffer,
une partie de détection de température (13) est fournie qui est adaptée pour détecter une température du dispositif de chauffage ou de l'objet à chauffer par le dispositif de chauffage,
la partie de commande (9) côté réception d'énergie est adaptée pour commander l'opération d'ouverture/de fermeture de la partie de transfert (8) de sorte que la température détectée par la partie de détection de température atteint une température prédéterminée, pour adapter l'énergie électrique fournie au dispositif de charge à partir de la bobine de réception d'énergie (7).

5. Dispositif de réception d'énergie sans contact selon l'une quelconque des revendications 1 à 3, dans lequel
le dispositif de charge (10) est formé en partie par une bobine de chauffage (14) côté réception d'énergie et une partie de chauffage (12) à chauffer par ladite bobine de chauffage côté réception d'énergie,
une partie de détection de température (13) est fournie qui est adaptée pour détecter une température de la partie de chauffage,
la partie de commande (9) côté réception d'énergie est adaptée pour commander l'opération d'ouverture/de fermeture de la partie de transfert (8) de sorte que la température détectée par la partie de détection de température atteint une température prédéterminée, pour adapter l'énergie électrique fournie au dispositif de charge à partir de la bobine de réception d'énergie (7).

6. Dispositif de réception d'énergie sans contact selon l'une quelconque des revendications 1 à 3, dans lequel
le dispositif de charge (10) est formé en partie par un circuit d'alimentation en énergie (15),
une partie de détection de tension (19) est fournie qui est adaptée pour détecter une tension dans le circuit d'alimentation en énergie,
la partie de commande (9) côté réception d'énergie est adaptée pour commander l'opération d'ouverture/de fermeture de la partie de transfert (8) de telle sorte que la partie de détection de tension atteint une tension prédéterminée, pour adapter l'énergie électrique fournie au dispositif de charge à partir de la bobine de réception d'énergie (7).

7. Dispositif de transmission d'énergie sans contact comprenant:
un dispositif de chauffage par induction (1) comprenant une bobine de chauffage (2) pour générer un champ magnétique à haute fréquence et formant un dispositif d'alimentation; et
un dispositif de réception d'énergie sans contact (6) qui est disposé sur le dispositif de chauffage par induction et est adapté pour générer de l'énergie électrique souhaitée en recevant le champ magnétique à haute fréquence en provenance de la bobine de chauffage,
dans lequel
le dispositif de réception d'énergie sans contact comprend:
une bobine de réception d'énergie (7) adaptée pour délivrer de l'énergie électrique en recevant le champ magnétique à haute fréquence en provenance de la bobine de réception d'énergie;
un dispositif de charge (10) adapté pour être alimenté en énergie électrique en provenance de ladite bobine de réception d'énergie,
**caractérisé par**
une partie de transfert (8) adaptée pour ouvrir et fermer une connexion entre la bobine de réception d'énergie et le dispositif de charge; et
une partie de commande (9) côté réception d'énergie adaptée pour commander une opération d'ouverture/de fermeture de la partie de transfert afin adapter l'énergie électrique fournie au dispositif de charge à partir de ladite bobine de réception d'énergie; et, en outre,
**caractérisé par le fait que**
ladite partie de commande côté réception d'énergie est adaptée pour définir un intervalle de temps d'ouverture, pendant l'opération d'ouverture/de fermeture de la partie de transfert, de telle manière qu'il se situe dans un intervalle de temps pendant lequel le dispositif de chauffage par induction peut être réactivé afin adapter l'énergie électrique fournie au dispositif de charge à partir de ladite bobine de réception d'énergie.

8. Dispositif de transmission d'énergie sans contact selon la revendication 7,
dans lequel ladite bobine de réception d'énergie (7) est disposée sur une position montrant vers la bobine de chauffage (2) dans le dispositif de chauffage par induction (1) lorsque le dispositif de réception d'énergie (6) génère de l'énergie électrique en recevant le champ magnétique à haute fréquence en provenance du dispositif de chauffage par induction.

9. Dispositif de transmission d'énergie sans contact selon la revendication 8,
dans lequel ladite partie de commande (9) côté réception d'énergie est adaptée pour faire passer la partie de transfert (8) à un état ouvert afin de faire passer le dispositif de chauffage par induction (1) à un état d'arrêt d'alimentation dans un intervalle de temps pendant lequel ledit dispositif de chauffage par induction peut être réactivé, et, en outre, pour faire passer la partie de transfert à un état fermé pour un intervalle de temps constant pour faire passer le dispositif de chauffage par induction (1) à un état d'alimentation, pendant l'opération d'ouverture/de fermeture de la partie de transfert, afin d'adapter l'énergie électrique fournie au dispositif de charge (10) à partir de ladite bobine de réception d'énergie (7).
